# EUROPEAN PATENT SPECIFICATION

(11) **EP 3 143 809 B1**
(45) Date of publication and mention of the grant of the patent: **07.07.2021**
(21) Application number: 15724183.7
(22) Date of filing: 06.05.2015
(51) Int. Cl.: H04W 56/00, H04L 5/00

(54) **HANDLING OF CELLS ASSOCIATED WITH TIMING ADVANCE GROUPS IN A WIRELESS COMMUNICATIONS SYSTEM**
HANDHABUNG VON MIT ZEITVORLAUFSGRUPPEN ASSOZIIERTEN ZELLEN IN EINEM DRAHTLOSKOMMUNIKATIONSSYSTEM
GESTION DE CELLULES EN ASSOCIATION AVEC DES GROUPES D'AVANCE TEMPORELLE DANS UN SYSTÈME DE COMMUNICATIONS SANS FIL

(30) Priority: 12.05.2014 US 201461991966 P; 12.05.2014 US 201461991912 P; 19.05.2014 US 201462000027 P; 09.01.2015 US 201514593568
(43) Date of publication of application: 22.03.2017
(73) Proprietor: Telefonaktiebolaget LM Ericsson (publ), 164 83 Stockholm (SE)
(72) Inventor: AXMON, Joakim, S-216 31 Limhamn (SE); BERGSTRÖM, Mattias, S-192 70 Sollentuna (SE); KAZMI, Muhammad, S-174 64 Sunbyberg (SE)
(74) Representative: Ericsson
(86) International application number: PCT/EP2015/059890
(87) International publication number: WO 2015/173079

(56) References cited:
- EP-A1- 2 536 228
- US-A1- 2013 195 084
- US-A1- 2013 279 433
- None

## Description

### TECHNICAL FIELD

The present invention generally relates to methods of handling cells associated with timing advance groups in a wireless communication system that supports uplink carrier aggregation.

### BACKGROUND

With demands on increased capacity and service in wireless telecommunication networks, solutions are provided to meet that demand. An example is the Long-Term Evolution (LTE) system specified by members of the 3^{rd} Generation Partnership Project (3GPP). LTE, which is more formally referred to as the Evolved Universal Terrestrial Radio Access Network (E-UTRAN) is a standard for wireless data communications technology and an evolution of the GSM/UMTS standards. The goal of the standardization of LTE was to increase the capacities and speeds of wireless data networks.

Further development of the LTE specifications continues. These development efforts, which are directed to providing several improvements known as "LTE Advanced," include the introduction of carrier aggregation (CA), whereby the network and wireless communication devices (referred to as user equipments or "UEs" in 3GPP specifications) can communicate with one another over multiple distinct carriers, often referred to as "cells," at the same time. Carrier aggregation provides for the use of very large bandwidths, e.g., up to 100 MHz of spectrum, and thus can support very high data rates.

With carrier aggregation, the multiple carriers utilized by a given wireless device or devices may come from and/or be terminated at different locations. As a result, issues of how to handle timing advance arise when supporting multiple carriers.

US 2013/279433 A1 discloses a wireless device receiving a timing advance command comprising a time adjustment value and an index identifying a secondary cell group. The wireless device triggers an action in response to detecting a difference between primary cell group timing and secondary cell group timing, the difference being greater than a threshold, the action aiming to reduce the occurrence of unwanted effects of excessive timing differences. EP 2536228 A1 discloses methods and apparatuses for detecting sharing of a timing advance value. The disclosure suggests determination of a too large time offset for the sharing through a time offset between synchronisation of downlink component carriers to uplink component carriers.

### SUMMARY

Techniques and apparatus for handling timing alignment for a wireless device capable of aggregating carriers for uplink transmissions are disclosed.

A method is defined in claim 1 and an apparatus in clai 9.

### BRIEF DESCRIPTION OF THE DRAWINGS

The above, as well as additional objects, features and advantages of the present invention, will be better understood through the following illustrative and non-limiting detailed description of preferred embodiments of the present invention, with reference to the appended drawings.
Fig. 1 schematically illustrates example carrier aggregation deployment scenarios.
Fig. 2 illustrates an example of a future deployment scenario.
Fig. 3 illustrates an example of future deployment scenario with carrier aggregation.
Fig. 4 schematically illustrates features of the LTE network architecture.
Fig. 5 illustrates that wireless devices may be located at different distances from the eNodeB.
Fig. 6 illustrates that a wireless device starts an uplink transmission before a nominal time given by a timing reference, by employing timing advance to the uplink transmission.
Fig. 7 schematically illustrates signalling over the air interface for the contention-based random access procedure used in LTE.
Fig. 8 illustrates signalling in the contention-based random access procedure used in LTE.
Fig. 9 is a schematic illustration of contention-based random access, where there is contention between two wireless devices.
Fig. 10 is an illustration of a 32.5µs wide uplink aggregation window being moved by the wireless device or network node when sTAG#2 changes relative to pTAG and sTAG#1.
Fig. 11 is a flow chart of a method of a wireless device according to some embodiments of the presently disclosed techniques and apparatus.
Fig. 12 is a flow chart of a method of a network node according to some embodiments of the presently disclosed techniques and apparatus.
Fig. 13 is a flow chart illustrating an example method for evaluating a serving cell candidate for inclusion in uplink carrier aggregation.
Fig. 14 is a block diagram schematically illustrating a network node according to some embodiments.
Fig. 15 is a block diagram schematically illustrating an example communication device.
Fig. 16 schematically illustrates a computer-readable medium and a processing device.
Fig. 17 is another flow chart illustrating an example method for handling TAGs for a wireless device capable of aggregating carriers for uplink transmissions.
Fig. 18 is a block diagram illustrating an example processor comprising functional units for handling TAGs for a wireless device capable of aggregating carriers for uplink transmissions.

### DETAILED DESCRIPTION

The discussion that follows describes wireless communication devices (e.g., LTE UEs) and wireless network nodes (e.g., LTE base stations, referred to as "eNodeBs" or "eNBs") that, as will be demonstrated below, determine which secondary timing advance group (sTAG) and associated serving cells should be removed from uplink carrier aggregation in the event that not all configured TAGs fit within the uplink aggregation window, i.e., when the maximum transmission timing difference required between at least one pair of the TAGs exceeds the capabilities of the UE. The capability of a particular UE to handle transmission timing differences between TAGs may be signalled by the UE to the network node, pre-defined by the standard, or otherwise derived, in various embodiments of the techniques described below.

In some embodiments, in determining which of two or more sTAGs to release, the UE and/or network node looks at which combination of TAGs and associated serving cells that maximize performance objectives, which may be scenario-dependent. In some embodiments, the UE and/or network node may assess whether a serving cell that no longer can be used for uplink carrier aggregation can still be used for downlink carrier aggregation.

Within the approaches summarized above, numerous embodiments and alternatives are possible. Several of these will be described below, with reference to embodiments and examples thereof together with explanations of contexts in which the embodiments and examples may work.

### Intra-Node carrier aggregation

Carrier aggregation was introduced in Release 10 of the E-UTRAN standard as a means for qualifying E-UTRAN to meet the requirements for 4G (1000 Mbit/s) as well as for allowing operators with two or more small (less than 20 MHz) and scattered allocations of spectrum to provide a good user experience by aggregating the scattered allocations, so as to allow uplink and/or downlink transmissions in an aggregated bandwidth of, for example, 10 MHz, 20 MHz, or more.

With carrier aggregation, a UE is connected to a serving cell termed the Primary Cell (PCell) on what is referred to as the Primary Component Carrier (PCC). Mobility of the UE is managed with respect to this carrier. Note that while the terms "carrier" and "cell" are used somewhat interchangeably, a "cell" can be viewed as a discrete set of channels and services provided over a "carrier," which, in the context of carrier aggregation, can be referred to as a "component carrier."

In the event that the UE is using services that require high throughput, the network may activate, via signalling to the UE, one or more additional serving cells, each termed a Secondary Cell (SCell), on what is referred to as a Secondary Component Carrier(s). The activation may happen before or after the SCell has been detected by the UE.

Two types of aggregation scenarios are considered for Release 10 of the 3GPP specifications for LTE: intra-band contiguous aggregation and inter-band aggregation. In Release 11, one more is considered: intra-band non-contiguous aggregation.

For intra-band contiguous aggregation, the PCell and SCell(s) are contiguous in frequency. The LTE specifications require that the time difference between PCell and SCell for contiguous intra-band aggregation is allowed to be at most ±130 nanoseconds. (See 3GPP TS 36.104, rev 11.4.0, subclause 6.5.3, available at http://www.3gpp.org). It is further assumed in the standards that for this particular scenario, one can use a single fast Fourier transform (FFT) operation to simultaneously demodulate the signals from both the PCell and SCell. In practice, to meet these requirements, the PCell and SCell must be co-located, i.e., transmitted from the same site, since otherwise propagation delays would generally make it impossible to use a single FFT.

For intra-band non-contiguous aggregation, the timing difference is allowed to be at most ±260 ns, but it is not assumed that the cells are co-located or that a single FFT can be used. For inter-band carrier aggregation, the timing difference between the PCell and SCell is allowed to be at most ±260 ns. However, for this scenario it is assumed that the cells may not be co-located and that the UE will have to cope with a propagation delay difference between PCell and SCell of up to ±30 microseconds, resulting in a maximum delay spread of ±30.26 microseconds. (See 3GPP TS 36.300, rev 11.5.0, Annex J, available at http://www.3gpp.org).

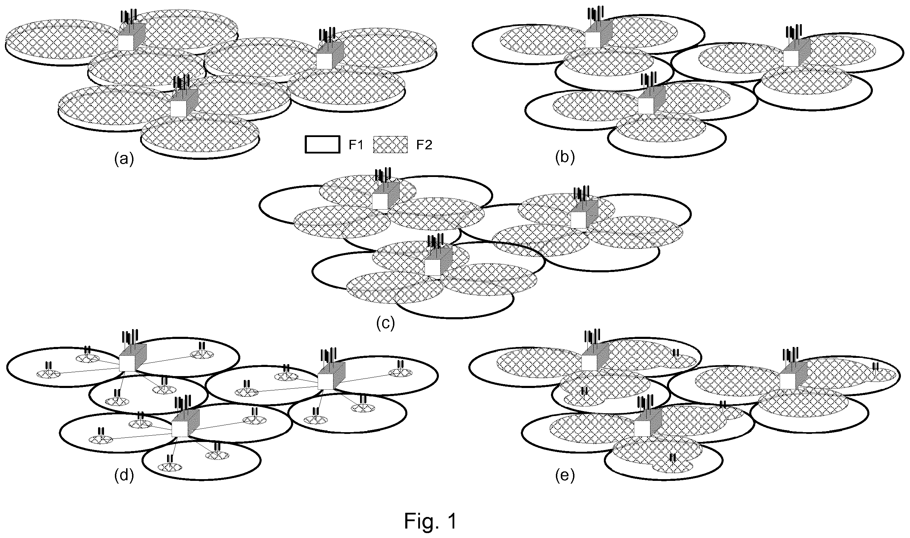

Fig. 1 schematically illustrates several carrier aggregation deployment scenarios. In Fig. 1(a), the aggregated carriers are co-located and overlaid intra-band carriers. Because they are intra-band, there is a similar path loss for the carriers F1 and F2. In Fig. 1(b), the aggregated carriers are co-located and overlaid, but are inter-band carriers. Thus, the carriers F1 and F2 in this case have different path losses, resulting in coverage areas that are dissimilar. In Fig. 1(c), the aggregated carriers are co-located inter-band carriers that are partially overlaid. In Fig. 1(d), by contrast, the carriers F1 and F2 non-co-located inter-band carriers. This may be done using remote radio heads (RRHs), for example, to provide improved throughput at hotspots. Finally, Fig. 1(e) illustrates an overlaid inter-band scenario with repeaters.

The examples of foreseen deployment scenarios up to Release 11 of the 3GPP standards are shown in Fig. 1. For co-located intra-band scenarios with fully overlapping coverage of PCell and SCell, it will be appreciated that the eNB can configure and activate the SCell when needed, based on reported measurements for PCell alone, since the measurements for the PCell will reflect propagation conditions that are similar to those applicable to the SCell.

The timing of an SCell relative to the UE is known to the network in the event that the UE has measured and reported the cell recently, either as an inter-frequency neighbour cell or as a cell on a configured secondary component carrier F2. Additionally, whether or not the cell has been reported to the network before, the timing of an SCell is also known to the network in the case of intra-band contiguous carrier aggregation, i.e., where PCell and SCell are co-located and the spectrums for PCell and SCell are back-to-back. In these scenarios, the network can assume that when the UE gets an activation command for the SCell under those conditions, the UE may be able to start reception from the cell without prior fine tuning of the timing.

In the event that an SCell has not been reported previously and is on another band (inter-band scenario) or non-adjacent, the timing of the SCell is not known to the UE. However, according to the specifications, the timing of the SCell should fall within ±30.26 microseconds (almost half an OFDM symbol) of the timing of the PCell. In this case, the timing of the SCell will have to be tuned before the UE can start data reception from the SCell.

### Future deployment scenarios and inter-node aggregation

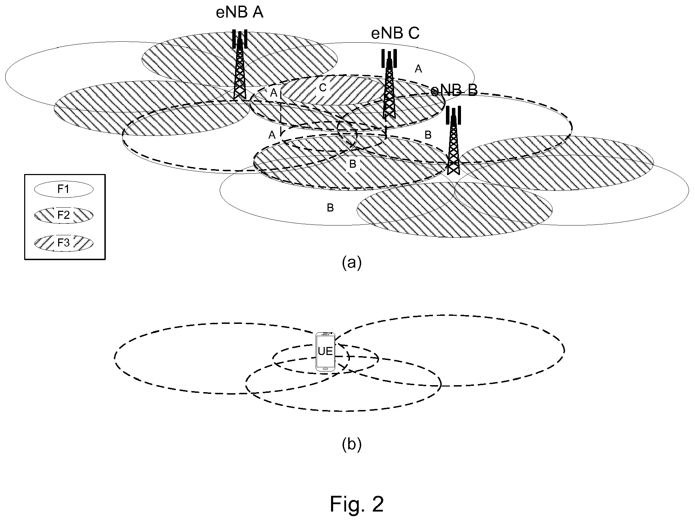

Fig. 2 illustrates an example of a possible future deployment scenario. It can be seen from Fig. 2(a), which illustrates a layout of partially overlaid cells locations, that a UE in some particular locations may have to aggregate one carrier (e.g., F1) from base station A and another (e.g. F2) from base station B. Moreover, in particular spots the UE may also aggregate additional carriers, e.g. F3 cell from base station C. Fig. 2(b) is an illustration of a UE within the coverage of multiple cells at different carriers.

From Release 12 of the 3GPP specification and onwards, so-called inter-node radio resource aggregation, which sometimes is referred to as Dual Connectivity, is under discussion. (See 3GPP TR 36.842, v. 12.0.0, available at http://www.3gpp.org.) For one of the foreseen scenarios, the UE may be served by one or more cells handled by one base station (sometimes referred to as a master base station or master eNB (MeNB)), out of which one cell is referred to as the primary cell (PCell), and may be simultaneously served by one or more cells handled by another base station(s) (sometimes referred to as a secondary base station or secondary eNB (SeNB)). The cells handled by the MeNB are sometimes referred to as the Master Cell Group (MCG) while the cells handled by the SeNB are sometimes referred to as the Secondary Cell Group (SCG). In the event that the MCG cell(s) and SCG cell(s) are on different carriers, the UE can aggregate the carriers in a manner similar to how aggregation is done for the Release 11 deployment scenarios in Fig. 1 above, with one difference. Up to Release 11 of 3GPP, aggregated cells were handled by the same base station with either co-located cells on different carriers but sent from the same site, or non-co-located cells on different carriers, where those one of the carriers are using RRH (remote radio heads) (deployment scenarios (d) and (e) in Fig. 1). It shall be noted that in Dual Connectivity, the cells belonging to one cell group (i.e. either MCG or an SCG) can be placed in different TAGs if needed, e.g. if they are on different frequencies or handled by different transmission/reception points (antennas).

One example of inter-node radio resource aggregation/inter-node carrier aggregation is shown in Fig. 2. Here a UE that is in coverage of base station A on one carrier, base station B on the other carrier, and base station C on a third carrier may aggregate all three carriers even though the cells are handled by different base stations. Up to Release 11, aggregation would only be permitted within each respective base station A or B or C, but not in combination. While Fig. 2 illustrates a scenario in which the cells all have similar sizes, in some scenarios the cells on some carriers may have macro coverage (large cell radius) whereas other may have hotspot coverage (small cell radius).

At a given location there may be multiple layers of coverage from different base stations, as illustrated in Fig. 2, with the coverages overlapping each other at least partially. Although the current assumption in the standard is that the UE shall be capable of aggregating up to five carriers, there is no such limitation on the number of carriers within which the UE may be in coverage. It can be assumed that in future deployment scenarios virtually every suitable spectrum will be used, to meet the throughput targets for the fifth generation of mobile communication systems (5G). It can also be foreseen that there will be a mix of large and small cells, i.e., any combination of macro, micro, pico and femto cells, and a mix of intra-node and inter-node aggregation. Moreover, mobile base stations are being considered for 5G.

In a heterogeneous deployment (involving a mixture of large and small cells), a "macro cell" is served by a wide-area base station, which may be referred to as a high-power node (HPN). The maximum output power of a HPN can, for example, typically be between 43-49 dBm. Nodes providing smaller coverage areas, referred to as low-power nodes (LPNs), may be referred to as micro nodes (or medium-range base stations), pico nodes (or local-area base stations), femto nodes (or home base stations), relay nodes, etc. The maximum output power of an LPN for example typically is between 20-38 dBm, depending upon its power class. For instance, a pico node typically has a maximum output power of 24 dBm, whereas a home base station (HBS) has a maximum output power of 20 dBm. Home base stations, pico nodes, and micro nodes serve femto cells, pico cells and micro cells respectively, and generally represent different base station power classes.

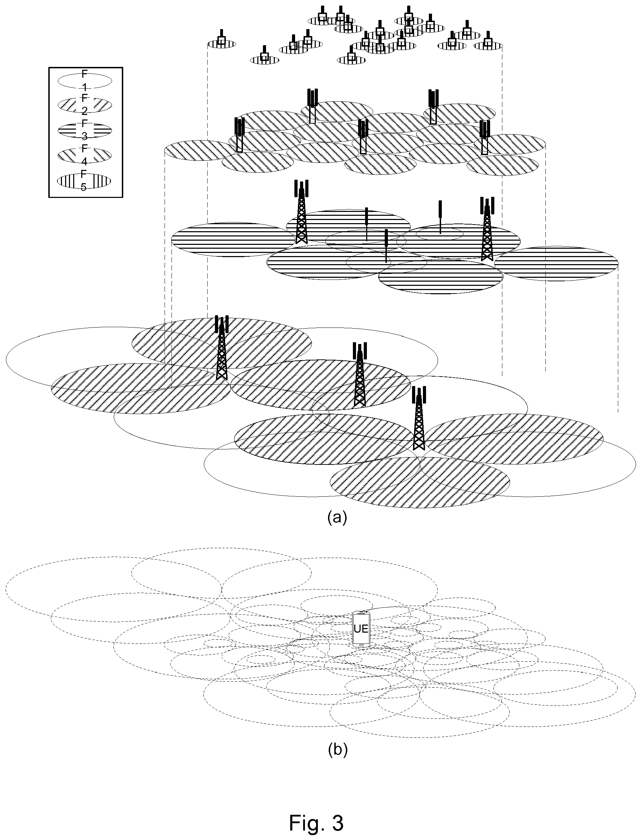

Fig. 3 illustrates an example of a future deployment scenario with aggregation using five downlink carriers, where Fig. 3(a) illustrates several layers with cells on different carriers and Fig. 3(b) illustrates the cell coverage experienced by UE. More particularly Fig. 3 illustrates a hypothetical deployment with five carriers where there are two layers with macro cells (F1 and F2), one layer with micro cells and picocells mixed (F3), one layer with picocells (F4), and one layer with femtocells (F5) - e.g. hotspots at cafés, restaurants, etc. Typical cell radii for the different kinds of cells are provided in Table 1. The UE will go in and out of coverage of individual cells on one or more of the 5 carriers while mobile.

**Table 1: Cell types and typical cell radii**

| **Cell type** | **Radius** |
|---|---|
| Macro | > 2000m |
| Micro | 200 - 2000m |
| Pico | 10 - 200m |
| Femto | 0 - 10m |

### Dual connectivity

In dual connectivity (DC) scenarios, the UE can be served by two nodes, which are called the master eNB (MeNB) and the secondary eNB (SeNB). The UE is configured with a PCC from each of the MeNB and SeNB. The PCells from the MeNB and SeNB are called the PCell and PSCell (Primary SCell) respectively. Sometimes PSCell is referred to as the Special SCell. The PCell and PSCell is typically operated by the UE independently. The UE is also configured with one or more SCCs from each of the MeNB and SeNB. The corresponding secondary serving cells served by the MeNB and SeNB are called SCells. The UE in DC typically has separate transmit/receive (TX/RX) branches for each of the connections with MeNB and SeNB. This allows the MeNB and SeNB to independently configure the UE with one or more procedures, e.g., radio link monitoring (RLM), discontinuous receive (DRX) cycles, etc., on the PCell and PSCell respectively.

### Network architecture

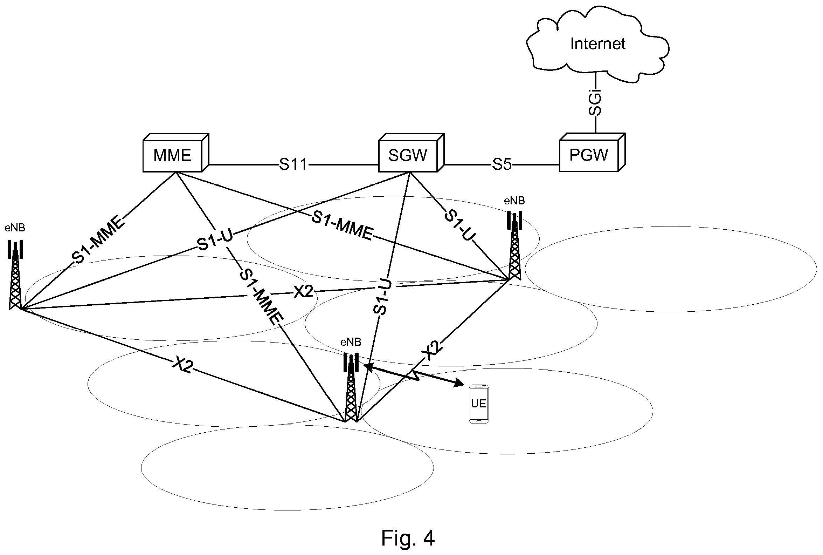

Fig. 4 schematically illustrates an example of the LTE network architecture, which is referred to when demonstrating some embodiments of the presently disclosed techniques and apparatus. Several of the illustrated nodes are part of the "core network," including the Mobility Management Entity (MME), which is a control node for the LTE access network, the Serving Gateway (SGW), which routes and forwards user data packets while acting as mobility anchors for UEs, and the PDN Gateway (PGW), which provides an interface to a Public Data Network (PDN) such as the Internet. MMEs and SGWs communicate with base stations, referred to in LTE as eNBs, over the S1 interface. The eNBs can communicate directly with one another over the X2 interface. Communication between the MME and the SGW is over the S11 interface, while communication between an SGW and a PGW is over the S5 interface. The S1, S11, S5, and X2 interfaces are defined in the LTE standard.

### Event-triggered reporting

For the purpose of mobility measurements, the UE can get configured with events, which when triggered, render some action from the UE, e.g. that it shall report measured signal strength and signal interference values for detected cells. Existing events in E-UTRA are listed below (3GPP TS 36.331, V12.1.0):
- Event A1 (Serving becomes better than threshold)
- Event A2 (Serving becomes worse than threshold)
- Event A3 (Neighbour becomes offset better than PCell)
- Event A4 (Neighbour becomes better than threshold)
- Event A5 (PCell becomes worse than threshold1 and neighbour becomes better than threshold2)
- Event A6 (Neighbour becomes offset better than SCell)
- Event B1 (Inter RAT neighbour becomes better than threshold)
- Event B2 (PCell becomes worse than threshold1 and inter RAT neighbour becomes better than threshold2)

The reports can be used by the eNB to decide when to add/remove serving cells, change which cell is the PCell, etc. For example, the eNB can configure the UE with an A5 event in order to be notified by the UE when the UE finds a cell with strong signal at the same time as the PCell is of poor signal and the eNB can use this information to change which cell is the PCell.

### Timing advance

In order to preserve orthogonality at the base station between signals transmitted in the uplink, the uplink transmissions from multiple UEs in LTE need to be time aligned at the eNodeB receiver. This means that the transmit timing of the UEs, which are under the control of the same eNodeB, should be adjusted to ensure that their received signals arrive at the eNodeB receiver at the same time or, more specifically, to ensure that their received signals should arrive separated by a time that is well within the interval defined by the cyclic prefix (CP). In LTE, the normal CP length is about 4.7 µs. This degree of time alignment ensures that the eNodeB receiver is able to use the same resources, e.g., the same Discrete Fourier Transform (DFT) or FFT resources, to receive and process the signals from multiple UEs.

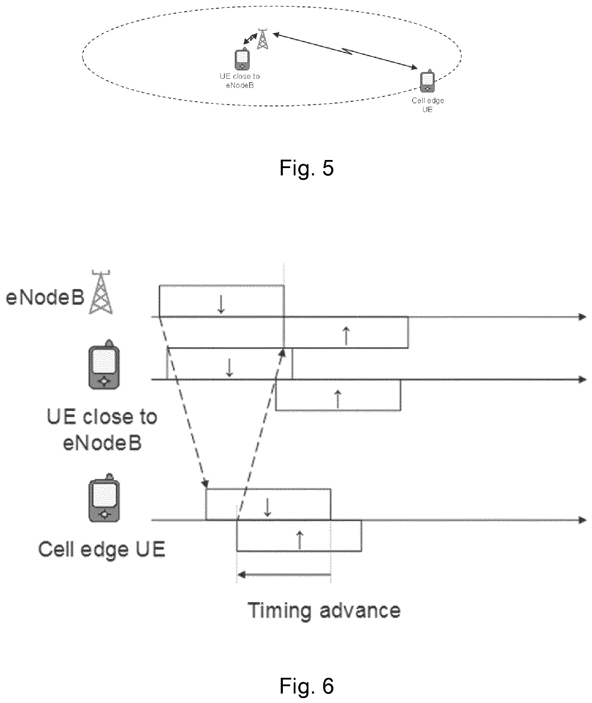

Since different UEs served by a given eNodeB may be located at different distances from the eNodeB, as illustrated in Fig. 5, the UEs will need to initiate their uplink transmissions at different times to ensure that they are time aligned at the eNodeB. A UE far from the eNodeB needs to start transmission earlier than a UE close to the eNodeB. This can be handled by timing advance of the uplink transmissions, whereby a UE starts its uplink transmission at a defined time, *N_{TA},* before a nominal time given by a timing reference. This concept is illustrated in Fig. 6.

The uplink timing advance (TA) is maintained by the eNodeB through timing advance commands (also referred to as timing alignment commands) sent to the UE. These timing advance commands (TA commands) are based on measurements on uplink transmissions received from that UE. For example, the eNodeB measures two-way propagation delay or round trip time for each UE to determine the value of the TA required for that UE.

Through timing advance commands, the UE may be ordered to start its subsequent uplink transmissions earlier or later than current uplink transmission timing. In LTE, if a timing advance command is received by the UE on subframe n, the corresponding adjustment of the uplink transmission timing shall by applied by the UE from the beginning of subframe *n*+6. The timing advance command indicates the change of the uplink timing relative to the current uplink timing of the UE transmission as multiples of 16 *Ts,* where *Ts* = 32.5 nanoseconds and is called the basic time unit in LTE.

In the case of a random access response sent to the UE, an 11-bit timing advance command, *T_{A}*, for a given timing advance group (TAG) indicates *N_{TA}* values by index values of *T_{A}* = 0, 1, 2, ..., 1282, where an amount of the time alignment for the TAG is given by *N_{TA}* = *T_{A}* ×16. *N_{TA}.* which is defined above, is the time difference between the UL transmission and a reference time.

In situations other than a random access response, a 6-bit timing advance command, *T_{A}*, for a given TAG indicates an adjustment of the current *N_{TA}* value, *N_{TA,old},* to the new *N_{TA}* value, *N_{TA,new},* by index values of *TA* = 0, 1, 2,..., 63, where *N_{TA,new}* = *N_{TA,old}* + (*TA* -31)×16. Here, adjustment of *N_{TA}* value by a positive or a negative amount indicates advancing or delaying the uplink transmission timing for the TAG by a given amount respectively.

Timing advance updates are signalled by the eNB to the UE in Medium Access Control (MAC) Protocol Data Units (PDUs).

There may be a strict relation between downlink transmissions and corresponding uplink transmissions. One example of this is the timing between a downlink shared channel (DL-SCH) transmission on the Physical Downlink Shared Channel (PDSCH) and the hybrid automatic repeat request (HARQ) ACK/NACK feedback transmitted in the uplink, on either the Physical Uplink Control Channel (PUCCH) or the Physical Uplink Shared Channel (PUSCH). Another example is the timing between an uplink grant transmission on PDCCH and the Uplink Shared Channel (UL-SCH) transmission on the Physical Uplink Shared Channel (PUSCH).

As can be seen from Fig. 6, by increasing the timing advance value for a UE, the UE processing time between a subsequent downlink transmission and the corresponding uplink transmission decreases. For this reason, an upper limit on the maximum timing advance has been defined by 3GPP in order to set a lower limit on the processing time available for a UE. For LTE, this value has been set to roughly 667us which corresponds to a cell range of roughly 100 kilometres (note that the TA value compensates for the round trip delay).

In Release 10 of the specifications for LTE, there is only a single timing advance (TA) value per UE and all uplink cells are assumed to have the same transmission timing. The timing reference point for the TA is the receive timing of the primary DL cell. In Release 11 of the LTE specifications, support for multiple TA values was introduced, so that one UE may have different TA values for different cells. One reason for the introduction of multiple TA values is that a Release 11 UE should support uplink transmission to multiple uplink reception points. Since a UE will, in general, observe different round trip delays to different physical nodes, the UE will, in general, need different TA values for each of these different physical nodes. A UE might also need different TA values for uplink transmissions to cells in different bands.

The current assumption in 3GPP is that the eNB will group together, in a so-called TA group (TAG), those serving cells of a UE that the eNB considers to be suitable for use by the UE with the same TA value. TA grouping will be signalled to the UE by the network, using Radio Resource Control (RRC) signalling. TA grouping can be done for example depending on deployment where UL serving cells terminated at the same physical node will be grouped in to the same TA group.

Serving cells in the same TA group will share a TA value, with the downlink of one serving cell in the TA group being used as timing reference. For each TA value there is an associated timer called TA timer. The UE considers the serving cell in a TA group in-synch, i.e. time aligned, when the TA timer associated with that TA groups TA value is running. A TA timer is started or restarted upon reception of a TA command addressed to the associated TA group. If a serving cell is considered time aligned by the UE, the UE is allowed to perform Physical Uplink Control Channel (PUCCH), Physical Uplink Shared Channel (PUSCH) and sounding reference symbol (SRS) transmissions on that serving cell.

### Random access

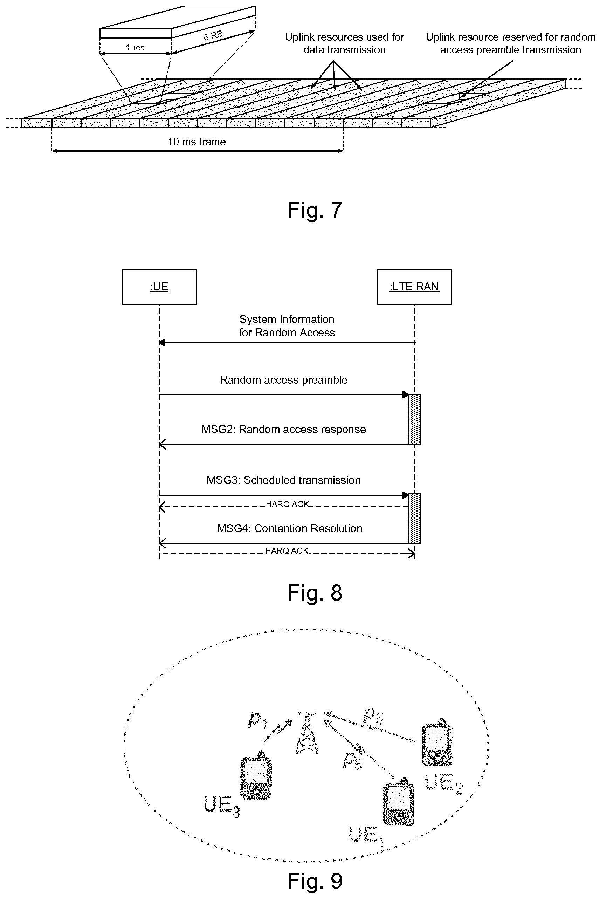

In LTE, as in any communication system, a mobile terminal may need to contact the network (via the eNodeB) without having a dedicated resource in the Uplink (from UE to base station). To handle this, a random access procedure is available where a UE that does not have a dedicated uplink resource assigned to it may transmit a signal to the base station. The first message (MSG1 or preamble) of this procedure is typically transmitted on a special resource reserved for random access, a physical random access channel (PRACH). This channel can, for instance, be limited in time and/or frequency (as in LTE). This is shown in Figure 7, which illustrates an example in which six resource blocks (RBs) in every tenth subframe are reserved for random access preamble transmission. The resources available for PRACH transmission are indicated to the terminals as part of the broadcasted system information (or as part of dedicated RRC signalling, e.g., in case of handover).

In LTE, the random access procedure can be used for a number of different reasons. Among these reasons are:
- initial access (for UEs in the LTE_IDLE or LTE_DETACHED states);
- incoming handover;
- resynchronization of the uplink;
- scheduling request (for a UE that is not allocated any other resource for contacting the base station); and
- positioning.

Fig. 9 schematically illustrates signalling over the air interface for the contention-based random access procedure in LTE. Signalling in the contention-based random access procedure used in LTE is illustrated in Fig. 8. Sometime after receiving system information defining the resources available for random access, the UE starts the random access procedure by randomly selecting one of the preambles available for contention-based random access. The UE then transmits the selected random access preamble on the physical random access channel (PRACH) to the eNodeB in the LTE radio access network (RAN).

The RAN acknowledges any preamble it detects by transmitting a random access response (MSG2), which includes an initial grant to be used on the uplink shared channel, a temporary C-RNTI, and a timing alignment (TA) update based on the timing offset of the preamble measured by the eNodeB on the PRACH. The MSG2 is transmitted in the downlink to the UE and its corresponding Physical Downlink Control Channel (PDCCH) message cyclic redundancy code (CRC) is scrambled with the random access radio network temporary identifier (RA-RNTI).

After receiving the random access response (MSG2), the UE uses the grant received therein to transmit a message (MSG3) that in part is used to trigger the establishment of radio resource control and in part to uniquely identify the UE on the common channels of the cell. The timing advance command provided in the random access response is applied in the uplink transmission in MSG3. The eNB can change the resources blocks that are assigned for a MSG3 transmission by sending an uplink grant that has its CRC scrambled with the temporary cell radio network temporary identifier (TC-RNTI).

The procedure ends with RAN solving any preamble contention that may have occurred for the case that multiple UEs transmitted the same preamble at the same time. This can occur since each UE randomly selects when to transmit and which preamble to use. If multiple UEs select the same preamble for the transmission on RACH, there will be contention between these UEs that needs to be resolved through the contention resolution message (MSG4). MSG4 is used by the eNB for contention resolution. MSG4 has its PDCCH CRC scrambled with the C-RNTI, if the UE previously has a C-RNTI assigned. If the UE does not have a C-RNTI previously assigned, MSG4 has its PDCCH CRC scrambled with the TC-RNTI.

Fig. 9 is a schematic illustration of contention based random access, where there is contention between two UEs. The case when contention occurs is illustrated in Fig. 9, which shows two UEs that transmit the same preamble, p₅, at the same time. A third UE also transmits at the same RACH, but since it transmits with a different preamble, p₁, there is no contention between this UE and the other two UEs.

The UE can also perform non-contention based random access. A non-contention based random access or contention free random access can be initiated by the eNB to get the UE to achieve synchronization in the uplink, for example. The eNB initiates a non-contention based random access either by sending a PDCCH order or indicating it in an RRC message. The latter approach is used in the case of handover.

In Release 10 of the LTE specifications, the random access procedure is limited to the primary cell only. This implies that the UE can only send a preamble on the primary cell. Further, MSG2 and MSG3 are only received and transmitted on the primary cell. MSG4 can, however, be transmitted on any downlink cell, according to the Release 10 standards.

In Release 11 of LTE, the current assumption is that the random access procedure will be supported also on secondary cells, at least for those UEs supporting Release11 carrier aggregation. So far, in this disclosure, only network-initiated random access on SCells is assumed, but developments will be demonstrated below.

### Initial TAC and subsequent TAC

TA values are used by the UE to offset the uplink transmission timing relative to a reference. The current assumption in 3GPP is that the downlink reception timing of a serving cell is used as timing reference, and the UL transmission timing will be offset relative to the downlink reception timing of that timing reference cell. For random access preamble transmission, the UE uses a TA value of zero and the preamble will therefore be transmitted at the time of downlink reception of the timing reference cell. When the eNB receives the preamble it measures the time misalignment between the desired uplink reception timing on the cell on which the preamble was transmitted and the actual uplink timing of the preamble as received at the eNB. Based on this measured misalignment, the eNB creates an initial TA command that is sent to the UE in the random access response message (MSG2). When the UE receives this TA command it will apply the indicated TA value to the TA group that includes the cell on which the preamble transmission was performed. The TA value tells the UE how much to advance the uplink transmission in subsequent uplink transmissions on all cells belonging to that TA group.

Because a UE can move and the round trip time to the uplink reception points can change, the TA values might become inaccurate. Therefore, when receiving uplink transmissions from a UE on a cell, the eNB measures the time misalignment of the uplink signals from that UE on that cell. If the measured time misalignment of the uplink signals from a UE on a cell is judged to be too large by the eNB, the eNB can create a TA command message containing a delta update to the TA value used by that UE. The UE will, when receiving such a TA command, increase or decrease the TA value for the corresponding TAG according to the delta update.

The initial TA command is an 11-bit value, and is send in the random access response message. An initial TA command tells the UE how much the addressed TA value should be advanced. The addressed TA value is the TA value that is associated with the TA group to which the cell where the preamble was sent, or put in other words. If a UE perform random access on a cell belonging to a TA group *x*, then the TA value associated with TA group *x* is the addressed TA value. Subsequent TA commands are 6-bit values and are sent in TA command MAC Control Elements (CEs), which, aside from the TA command itself, also contain a TA group identity. The TA value associated with the identified TA group is the addressed TA value. A TA command tells the UE how much the TA value should be advanced relative to its previous value.

It has recently been agreed in 3GPP that, for the serving cells in the same TA group as the PCell, the downlink reception timing of the PCell should be the timing reference. For serving cells in a TA group not containing the PCell, the downlink reception timing of a serving cell selected by the UE should be used as timing reference.

When receiving a TA command, initial or subsequent, the UE will apply the TA command and start or restart the associated TA timer. The UE will consider the serving cells belonging to a TA group to be uplink in-synch, i.e., uplink time aligned, as long as the associated TA timer is running. While the UE considers a cell uplink time-aligned, normal UL transmissions are allowed. When a cell is not considered to be uplink time-aligned, only PRACH transmissions are allowed.

### Autonomous uplink timing adjustment

In addition to the TA based adjustment of the uplink transmit timing, there are also pre-defined requirements on the UE to autonomously adjust its uplink timing in response to the drift in the eNodeB B transmit timing. The serving cell timing may change due to any of several different reasons, such as variation in radio conditions, imperfection in clocks, maintenance activities, deliberate attempts by the network to change timing, etc.

More specifically, the UE is required to follow changes in the frame transmit timing of downlink frames from the serving cell and correspondingly adjust its transmit timing for each uplink transmission, as necessary. The UE typically uses some sort of reference signals to track the downlink timing of the serving cell, such as a common reference signal, synchronization signals, etc. In addition, it is also required that the UE changes its timing (increase or decrease) at no more than a certain rate. This is to make sure that the UE does not change the timing too fast. This requirement stems from the fact that if the UE changes its timing in the order of several microseconds from one subframe to the next, the base station receiver may not be able to cope with the received signals. This will result in degraded demodulation of signals transmitted by the UE.

### Maximum time difference supported

The current LTE specifications state that a UE should cope with a relative propagation delay difference up to 30 microseconds among the component carriers to be aggregated in inter-band non-contiguous CA. (3GPP TS 36.300, v12.1.0, Annex J.) This requirement pertains to the downlink. The UE is also required to support up to a maximum uplink transmission time difference between signals transmitted on its uplink PCell and uplink SCell; this is approximately 32.5 microseconds. This also relates to the transmission timing difference between TAGs (e.g., between pTAG and sTAG or between any two sTAGs).

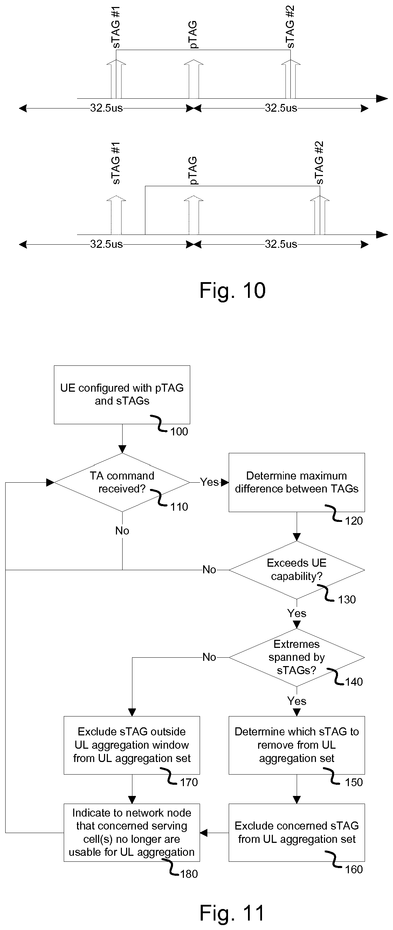

Fig. 10 is an illustration of a 32.5-microsecond-wide uplink aggregation window being moved by the UE or network node when the timing of sTAG#2 changes, relative to pTAG and sTAG#1. With this change in the uplink aggregation window, cells associated with sTAG#1 no longer will be used for UL aggregation.

### Some definitions

In some embodiments of the techniques and apparatus detailed below, the non-limiting term UE is used. A UE, as that term is used herein, can be any type of wireless device capable of communicating with a network node and/or another UE, using radio signals. A UE may also be referred to, in various contexts, as a radio communication device, a target device, a device-to-device (D2D) UE, a machine-type UE or UE capable of machine-to-machine communication (M2M), a sensor equipped with UE, an iPad or another wireless tablet computer, a mobile terminal, or a smart phone. A UE might take the form of a laptop-embedded equipment (LEE), a laptop mounted equipment (LME), a USB dongle, a Customer Premises Equipment (CPE), etc.

In the description of some embodiments, the generic terminology "radio network node" or simply "network node (NW node)", may be used. Unless the context clearly indicates otherwise, these terms may refer to any kind of network node, such as a base station, aa radio base station, a base transceiver station, a centralized controller, a core network node, an MME, a base station controller, a network controller, an evolved Node B (eNB), a Node B, a Master eNB (MeNB or MeNode B), a Secondary eNB (SeNB or SeNode B), a relay node, an access point, a radio access point, a Remote Radio Unit (RRU), a Remote Radio Head (RRH), etc.

A PCell and one or more activated SCells that a UE has been configured to use for downlink carrier aggregation operation and for which the UE is receiving and decoding, is herein referred to as belonging to the downlink aggregation set. The downlink aggregation set may or may not contain all activated SCells, at any given time. Reasons for the UE to exclude a SCell from the downlink aggregation set include that the time dispersion between the cells used for aggregation may become too large for the UE to handle. The minimum requirements state that the UE shall be capable of handling time dispersion of up to 30.26 microseconds between the earliest and latest arriving cells with respect to frame timing.

### Techniques for handling timing advance groups (TAGs) for a UE capable of carrier aggregation for uplink transmissions.

The PCell and one or more activated SCells that the UE has been configured to use for uplink carrier aggregation operation and for which the UE is monitoring scheduling grants and subsequently transmitting in are herein referred to as belonging to the uplink aggregation set. The uplink aggregation set at any given time may or may not include all activated cells configured for uplink operation. Reasons for excluding a cell include that a difference between at least one pair of the cells aggregated by the UE may exceed what the UE can handle. As discussed above, it can be derived from current specifications for LTE (e.g., 3GPP TS 36.300, v12.1.0, Annex J), that the UE must support time differences of up to about 32.5 µs. It should be noted, however, that this particular value (32.5 µs) may be changed in a future release of the specification. The techniques described herein for managing time differences greater than this required value can be applied to other values. It may also be the case that this requirement may only apply to a subset of a UE's serving cells. For example, if the UE and/or network have separate transceivers for different sets of cells, then it may be possible to allow larger time differences between these sets of cell. However, the techniques described herein may, in such a scenario, be applied to cells served by the same transceiver (on the UE and/or network side).

Fig. 11 is a flow chart of a method carried out by a UE, according to an example technique for removing one or more cells from an uplink aggregation set. As shown at block 100, the UE is assumed to have been configured by the network with two or more serving cells, in two or more TAGs with associated serving cell(s). As shown at block 110, the UE monitors TA command. When such a command is received, the UE determines the maximum transmission timing difference between any two TAGs that results when applying the TA command. This is shown at block 120. In the event that the maximum transmission timing difference over all combinations of TAGs exceeds the capability of the UE with respect to uplink aggregation, as shown at block 130, the UE checks whether the TAGs for which this maximum transmission timing difference is observed are both sTAGs, as shown at block 140. Note that the minimum requirement for handling transmission timing differences in LTE is currently about 32.5 microseconds, but particular UE implementations may cope with a larger value, e.g., 35 microseconds or 40 microseconds.

If the maximum transmission timing difference over all combinations of TAGs exceeds the capability of the UE to handle it, and if the TAGs for which this maximum transmission difference is observed are both sTAGs (as indicated by the "YES" arrow exiting block 140), the UE determines which of the sTAGs with associated serving cell(s) to remove from the aggregation set, as shown at block 150. Details of this operation are outlined further below. The UE then stops using the uplink in the concerned serving cells, as shown at block 160, and indicates to the network node that the cells no longer can be used for uplink aggregation, as shown at block 180. This indication may be explicit (signalling) or implicit (e.g., just stop using the uplink and let the network node detect it).

In the event that the maximum transmission timing difference exceeds the UE's capabilities but the maximum transmission timing difference corresponds to a pair of TAGs of which one is the pTAG, as indicated by the "NO" arrow exiting block 140, there may be no option but to remove the serving cells associated with the sTAG from the uplink aggregation set, as shown at block 170. This is because the pTAG is associated with the primary serving cell and hence cannot be removed from the set. In a future release of LTE or in another system, it may be possible to remove the PCell from the uplink aggregation set. Further, it may be possible in some embodiments to also apply a selection function to select whether the cells in the pTAG or in an sTAG should be removed from the UL aggregation set. These decisions may be based on any of a number of factors, some of which are described below.

In some embodiments of the technique shown in Figure 11, the UE may, while performing the operations at block 170 or at blocks 150 and 160, determine whether the serving cells to be excluded from uplink aggregation can still be used for downlink aggregation. The UE may then provide an explicit indication of whether the excluded cells can be used for downlink aggregation, e.g., along with the indication shown at block 180 of the figure.

When the UE is deciding which of the sTAGs with associated serving cell(s) to remove from the uplink aggregation set, it may take some or all of the following into account:
- services provided by cells in the respective TAGs, e.g., Multimedia Broadcast/Multicast Service (downlink) transmissions may be considered more important than, for example, a File Transfer Protocol (FTP) download, in which case it may be preferable to remove the cell carrying the FTP traffic;
- total theoretical downlink & uplink throughput offered by cells in the TAG, as indicated by bandwidth, TX antenna ports used, subframes reserved for multicast/broadcast single frequency network (MBSFN) use, and/or uplink and downlink allocations of subframes for Time Division Duplexing (TDD) operation;
- user profile, e.g., whether UE communication for the user is or tends to be heavy towards downlink or uplink;
- perceived signal quality in any or all of the cells under the TAG, and predicted achievable throughput, e.g., as indicated by signal-to-interference-plus-noise ratio (SINR), reference signal received quality (RSRQ), or block-error rate (BLER) measurements;
- whether the relative timing alignment of an sTAG is drifting away or closing in on the pTAG;
- cell size and UE mobility, e.g., in case of mobility, prioritizing larger cells over smaller ones with respect to radius;
- the value of the transmission timing difference between sTAG and pTAG - for example, if the timing difference between an sTAG and another TAG is close to the capability of the UE then there might be a risk that the sTAG has to be removed from UL aggregation soon;
- indices for the cells - the UE may select to exclude a cell(s) based on the indices associated with the serving cell(s). For example, the terminal may exclude cell (or cells) which has the highest or lowest cell index (or cell indices). Since the PCell has cell index 0 the UE may select the SCell(s) with the lowest index (or indices);
- TAG indices for the TAGs - the UE may select to exclude the cells in a TAG based on the indices of the TAGs. The UE may, for example select to exclude the cells in the TAG with the highest TAG index or the lowest TAG index. Since the pTAG has index 0, the UE may select the TAG with the lowest index out of the sTAGs.
- UE generated traffic load - the UE can consider the generated traffic load by the UE and select to exclude a cell such that the generated UE traffic matches the estimated capacity of the cells;
- quality of service (QoS) - the UE may select cells to keep/remove based on the QoS requirements of the UE. A UE may require a guaranteed bit rate and hence the UE may select to keep cells such that the guaranteed bit rate can be met. To do such calculation, other parameters and information may be considered, such as signal metrics for the UE, UE and network capabilities, bandwidth, etc.;
- capabilities of the cells - the UE may select cells (or TAGs with cells) based on information about which features are supported for the different cells. For example, the UE may prefer to keep a cell which supports MIMO rather than keeping a cell which does not support MIMO.

The UE-based technique illustrated in Fig. 11 and discussed above does not, in its simplest form, require any particular implementation support on the network node side, other than that the network node has either to detect that the UE is discontinuing use of the uplink in concerned serving cells, or to receive and decode explicit indications from the UE.

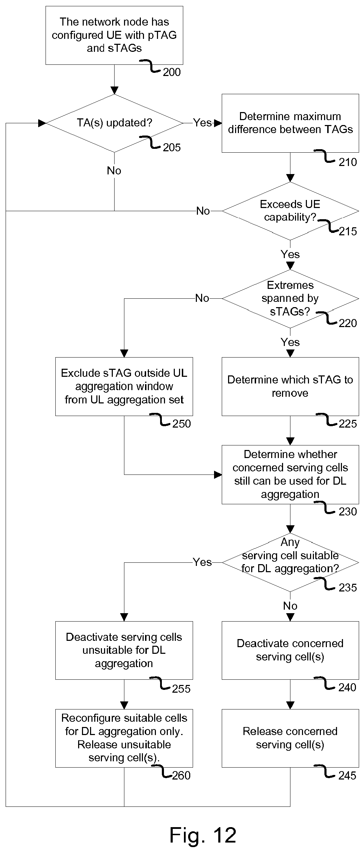

While Fig. 11 shows a UE-based approach to removing serving cells from the uplink aggregation set, it will be appreciated that a similar technique can be implemented on the network side, e.g., at an LTE eNB. Fig. 12 thus illustrates a flow chart of an example method, implemented in a network node, for removal of serving cell(s) from UL aggregation set.

As shown at block 200, the network node is assumed to have configured the UE with two or more TAGs, with associated serving cell(s). The network node monitors whether timing advance is updated in any of the TAGs, as shown at block 205. The network node may have the timing advance information for all TAGs in the event that it is managing all the cells itself. This may be the case in a scenario involving non-collocated cells under the same eNB, for example. In other scenarios, the network node may obtain some or all of the timing advance information by getting such information signalled from neighbouring network nodes that are managing cells that are used in the aggregation, e.g. in case of inter-node carrier aggregation or dual connectivity. This information may be signalled over X2, S1, or a yet-to-be specified interface, to name a few examples.

In other embodiments or in other scenarios, the network node may get the necessary timing advance information from the UE, which may, for instance, report applied time alignment for TAGs. Alternatively, the network node may derive all or some of such information by determining the position and detecting change of position of the UE, or from received signal time difference (RSTD) measurements for at least one serving cell in each TAG, as reported to the PCell for example. Still other approaches are possible.

In the event that the TA for one or more of the TAGs has changed, as indicated by the "YES" arrow exiting block 205 of Fig. 12, the network node determines the maximum transmission timing difference between any combination of TAGs, as shown at block 210. In the event that this maximum transmission timing difference exceeds the UE's capability to handle it, as indicated by the "YES" arrow exiting block 215, the network node further checks whether the maximum transmission timing difference is spanned by two sTAGs, as shown at block 220. Note that the network node may know the UE's capability with respect to a maximum transmission timing difference according to any of several means, in various embodiments. For example, the capability may be signalled to the network by the UE, or may be set according to standard, provided by manufacturer, deduced from historical interactions with the UE, etc.

If the maximum transmission timing difference is spanned by two sTAGs, as indicated by the "YES" arrow exiting block 220, the network node carrying out the method shown in Fig. 12 determines which of the sTAGs with associated serving cell(s) to remove from the UL aggregation, as shown at block 225. It may further assess whether the concerned serving cells can still be used for downlink aggregation, as shown at blocks 230 and 235, again based on UE capability but for maximum timing difference over any combination of serving cells used in downlink aggregation, which, depending on UE implementation and scenario, might be larger than the corresponding timing difference for uplink.

If the network node determines that none of the cells to be removed from the uplink aggregation still can be used for downlink aggregation, as indicated by the "NO" arrow exiting block 235, it deactivates the concerned cells, as shown at block 240, by sending a MAC activation/deactivation control element to the UE, and/or directly releases the cells via RRC signalling to the UE, as shown at block 245.

If instead the network node determines that some cells still can be used for downlink aggregation, as indicated by the "YES" arrow exiting block 235, the network node may deactivate those cells that cannot be used, as shown at block 255. The network node further reconfigures those serving cells that have been used for both downlink and uplink CA and that can still be used for downlink aggregation to downlink CA only, and releases the already deactivated cells that cannot be used anymore, as shown at block 260.

In the event that it is found that the maximum transmission timing difference is found for a combination including the pTAG and an sTAG, as indicated by the "NO" arrow exiting block 220, the network node may exclude the cells associated with the sTAG from uplink aggregation, as shown at block 250, since the pTAG is associated with the primary serving cell and hence may not be removed.

When the network node is deciding which of the sTAGs with associated serving cell(s) to remove from the UL aggregation set, it may take into account, in various embodiments, one or more of the following:
- services provided by cells in the respective TAGs, e.g. MBMS (downlink);
- total theoretical downlink & uplink throughput offered by cells in the TAG, as indicated by bandwidth, TX antenna ports used, subframes reserved for multicast/broadcast single frequency network (MBSFN) use, and/or uplink and downlink allocations of subframes for Time Division Duplexing (TDD) operation;
- user profile, e.g., whether UE communication for the user is or tends to be heavy towards downlink or uplink;
- perceived radio link quality in any or all of the cells under the TAG, and/or predicted achievable throughput, e.g., as indicated by signal-to-interference-plus-noise ratio (SINR), reference signal received quality (RSRQ), or block-error rate (BLER) measurements;
- whether the relative timing alignment of an sTAG is drifting away or closing in on the pTAG;
- cell size and UE mobility, e.g., in case of mobility, prioritizing larger cells over smaller ones with respect to radius;
- the value of the transmission timing difference between sTAG and pTAG - for example, if the timing difference between an sTAG and another TAG is close to the capability of the UE then there might be a risk that the sTAG has to be removed from UL aggregation soon;
- load balancing - the network may favour an sTAG with low-loaded cells over an sTAG with high-loaded cells;
- indices for the cells - the network may select to exclude a cell(s) based on the indices associated with the serving cell(s). For example, the network may exclude cell (or cells) which has the highest or lowest cell index (or cell indices). Since the PCell has cell index 0 the UE may select the SCell(s) with the lowest index (or indices);
- TAG indices for the TAGs - the network may select to exclude the cells in a TAG based on the indices of the TAGs. The network may, for example select to exclude the cells in the TAG with the highest TAG index or the lowest TAG index. Since the pTAG has index 0, the network may select the TAG with the lowest index out of the sTAGs.
- UE generated traffic load - the network can consider the generated traffic load by the UE and select to exclude a cell such that the generated UE traffic matches the estimated capacity of the cells;
- quality of service (QoS) - the network may select cells to keep/remove based on the QoS requirements of the UE. For example, a UE may require a guaranteed bit rate and hence the network may select to keep cells such that the guaranteed bit rate can be met. To do such calculation, other parameters and information may be considered, such as signal metrics for the UE, UE and network capabilities, bandwidth, etc.;
- capabilities of the cells - the network may select cells (or TAGs with cells) based on information about which features are supported for the different cells. For example, the network may prefer to keep a cell which supports MIMO rather than keeping a cell which does not support MIMO.

It will be appreciated that the network-based technique illustrated in Fig. 12, at least in its simplest forms, does not require any particular implementation support on the UE side.

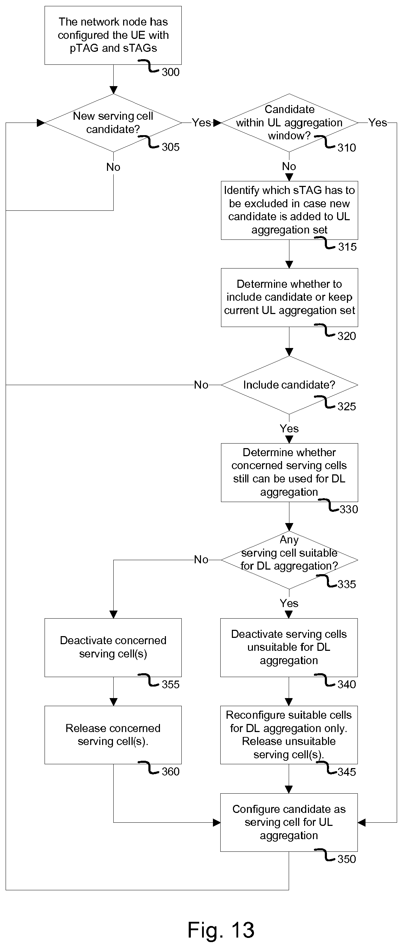

Fig. 13 is a flow chart illustrating another example method implemented in a network node. In this example, the method illustrates an example approach to evaluating serving cell candidate for inclusion in uplink aggregation, i.e., for making a decision as to whether a new serving cell can be added to an sTAG or pTAG.

As shown at block 300, the network node is assumed to have configured the UE with one or more TAGs. In response to determining that a new serving cell candidate has been identified by the network node, as indicated by the "YES" arrow exiting block 305, the network node predicts the required TA for the candidate cell, as shown at block 305, and determines whether it will fall within or outside the current uplink aggregation window, based on the predicted TA, as shown at block 310. The identification of the new serving cell candidate may be based, for example, on mobility measurement reports sent by the UE, positioning of the UE, RSTD measurements provided by the UE, etc.

If the candidate serving cell would fall outside the current uplink aggregation window, as indicated by the "NO" arrow exiting block 310, it means that the candidate cell, if included, will have to replace serving cells in one of the sTAGs. The determination of which sTAG is shown at block 315. As shown at block 320, the network node assesses the benefit from replacing the current serving cells in the sTAG with the candidate, as outlined further below. When the network node is deciding which of the sTAGs with associated serving cell(s) to include in the uplink aggregation set, it may take into account some or all of the various factors discussed above in connection with Fig. 12.

If the network node decides to replace the concerned serving cells with the new candidate, as indicated by the "YES" arrow exiting block 325, it further determines whether some or all of the cells associated with the sTAG still can be used for downlink aggregation, as shown at block 330. This is the same operation discussed above, in connection with Fig. 12. If not, as indicated by the "NO" arrow exiting block 335, the network node deactivates the concerned serving cells via MAC command to the UE, as shown at block 355, releases them via RRC signalling to the UE, as shown at block 360, and then configures the candidate cell to the UE as a new serving cell to be used for at least uplink aggregation, as shown at block 350.

In the event that some cells to be excluded from uplink aggregation can be used for downlink aggregation, as indicated by the "YES" arrow exiting block 335, the network node deactivates the serving cells that cannot be used for downlink aggregation, as shown at block 340, reconfigures the remaining cells from downlink and uplink to downlink-only aggregation, as shown at block 345, and then configures 350 the candidate cell to the UE as a new serving cell to be used for at least uplink aggregation.

Should the timing alignment for the candidate serving cell be predicted to fall within the existing uplink aggregation window, as indicated by the "YES" arrow exiting block 310, the network node can simply configure the UE to use it for at least uplink aggregation, as shown at block 350, without removing or reconfiguring other serving cells, as long as the number of serving cells does not increase beyond the capacity of the UE.

In some embodiments of the several techniques discussed above, the network node configures the UE with a parameter that allows or forbids the UE to remove one or more serving cells in uplink carrier aggregation, depending upon the outcome of the following monitoring or evaluation step at the UE: determination of the maximum transmission timing difference (• t) between any two TAGs that results when applying the TA command(s) and comparison with a threshold (•). This approach is based on the approach that the network node permits the UE to remove serving cell(s) in the uplink carrier aggregation set.

For example, in the event that the transmission timing difference over all combinations of TAGs exceeds the threshold (i.e., capability of the UE) with respect to uplink aggregation, then the UE, if allowed, may remove one or more serving cells in the sTAGs. The UE can determine the sTAG and the corresponding serving cells with that sTAG as described above in connection with Fig. 11. The UE may stop transmitting on the serving cell(s) which are excluded from uplink aggregation, e.g., deactivating or deconfiguring them. The UE may further indicate to the network node of the removal of the serving cells, as described in connection with Fig. 11.

As an example, the UE may be configured with a 1-bit indicator, where a value of 0 means the UE is allowed to remove (e.g., deactivate or deconfigure) one or more serving cells in sTAGs and a value of 1 means that the UE is not allowed to remove any of the serving cell in any sTAG, regardless of the values of the maximum transmission timing difference (• t) between any two TAGs.

In a variant of some of the embodiments discussed above, the network node configures the UE with the identifiers of one or more serving cells, the identifiers indicating those serving cells that the UE is allowed to remove from the uplink carrier aggregation set depending upon the outcome of the following monitoring or evaluation step at the UE: determination of the maximum transmission timing difference (• t) between any two TAGs that results when applying the TA command(s) and comparison with a threshold (•). The threshold may correspond to the capability of the UE with respect to UL aggregation (minimum requirement is about 32.5µs but particular UE implementations may cope with larger value). The configured identifiers of the serving cells can be PCI or any temporary identity assigned to the serving cell(s) and known to the UE e.g. when the UE is configured with UL CA configuration.

The network node may also configure the UE (additionally or alone) with the identifiers of the sTAG(s) whose serving cell(s) the UE is allowed to remove from uplink carrier aggregation set when the value of the • t determined by the UE exceeds the threshold (•). The configured identifiers of the sTAG(s) can be any temporary identity assigned to the sTAG(s) that is known to the UE, e.g., by information provided to the UE when the UE is configured with uplink CA configuration.

The configured sets of sTAG(s) and/or serving cell(s) are termed as "candidate sets for removal." Based on the received information about the serving cell IDs and/or sTAG(s) IDs, the UE removes only those serving cells that are allowed when • t determined by the UE exceeds the threshold (•). Out of the candidate sets of serving cells for removal, the UE determines the sTAG and the corresponding serving cells to be actually removed based on one or more criteria as described above in connection with the method illustrated in Fig. 11. The UE may further inform the network node about the removal of the serving cells, e.g., as described above in connection with the method illustrated in Fig. 11.

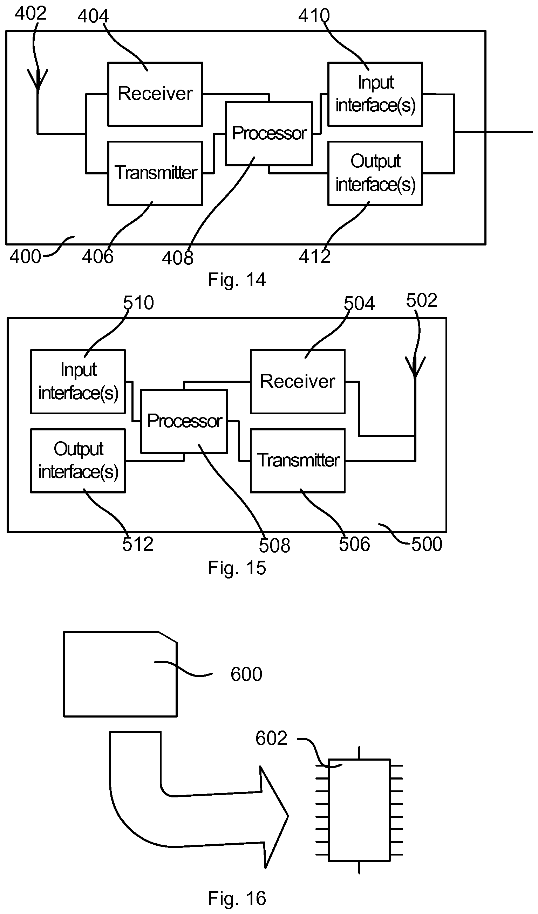

Fig. 14 is a block diagram schematically illustrating a network node 400 configured to carry out one or more of the network-based techniques described above. Network node 400 may be an LTE eNB, for example. Network node 400 comprises an antenna arrangement 402, a receiver 404 connected to the antenna arrangement 402, a transmitter 406 connected to the antenna arrangement 402, a processing element 408 that may comprise one or more circuits as detailed below, one or more input interfaces 410 and one or more output interfaces 412. The interfaces 410, 412 include signal interfaces, e.g., electrical or optical, for communicating with other parts of the communication network for signalling and payload, but may also include other interfaces.

Network node 400 is arranged to operate in a cellular communication network. In particular, by the processing element 408 being arranged to perform the embodiments demonstrated above, the network node 400 is capable of performing carrier aggregation communication and signalling to/from a UE accordingly and e.g. provide configurations and signal them to UEs, as demonstrated above. The processing element 408 can also fulfil a multitude of tasks, such as signal processing to enable reception and transmission since it is connected to the receiver 404 and transmitter 406, executing applications and signalling, controlling the interfaces 410, 412, etc.

Fig. 15 is a block diagram schematically illustrating a communication device 500 adapted to carry out one or more of the UE-based techniques described above. Communication device 500 may be an LTE UE, for example. UE 500 comprises an antenna arrangement 502, a receiver 504 connected to the antenna arrangement 502, a transmitter 506 connected to the antenna arrangement 502, a processing element 508 which may comprise one or more circuits, one or more input interfaces 510, and one or more output interfaces 512. The interfaces 510, 512 can be user interfaces and/or signal interfaces, e.g., electrical or optical. UE 500 is arranged to operate in a cellular communication network and, in some embodiments, may be capable of D2D communication.

In particular, by the processing element 508 being arranged to perform the embodiments demonstrated above, the UE 500 is capable of determining its carrier aggregation communication capabilities, determine whether cells associated with sTAGs are feasible for CA communication, and deactivate/release the cells or signal accordingly to a network node as discussed above. The processing element 508 can also fulfil a multitude of tasks, including signal processing to enable reception and transmission since it is connected to the receiver 504 and transmitter 506, executing applications, controlling the interfaces 510, 512, etc.

The methods according to the present invention is suitable for implementation with aid of processing means, such as computers and/or processors, especially for the case where the processing elements 408, 508 demonstrated above comprises a processor handling the CA cells. Therefore, there is provided computer programs, comprising instructions arranged to cause the processing means, processor, or computer to perform the steps of any of the methods according to any of the embodiments described with reference to Figs 11 to 13. The computer programs preferably comprise program code which is stored on a computer readable medium 600, as illustrated in Fig. 16, which can be loaded and executed by a processing means, processor, or computer 602 to cause it to perform the methods, respectively, according to embodiments of the present invention, such as the methods described with reference to Figs 11 to 13. The computer 602 and computer program product 600 can be arranged to execute the program code sequentially where actions of the any of the methods are performed stepwise. The processing means, processor, or computer 602 may be what normally is referred to as an embedded system. Thus, the depicted computer readable medium 600 and computer 602 in Fig. 16 should be construed to be for illustrative purposes only to provide understanding of the principle, and not to be construed as any direct illustration of the elements.

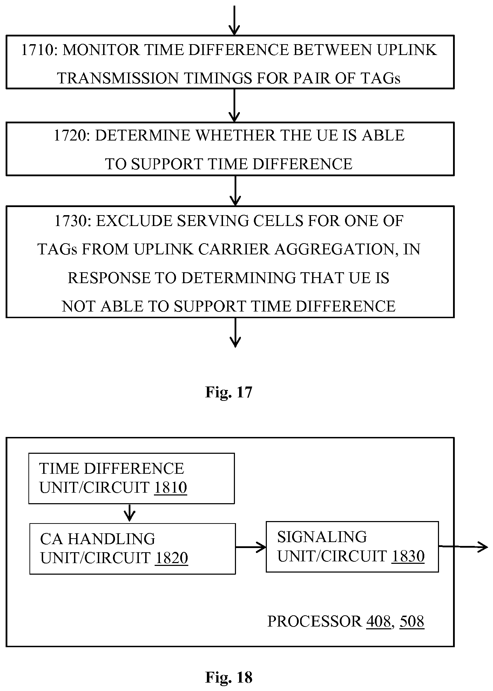

In view of the detailed examples and explanations provided above, it will be appreciated that Fig. 17 is a process flow diagram illustrating an example method for handling timing alignment for a UE capable of carrier aggregation for uplink transmissions. The method generally illustrated in Fig. 17 may be carried out by either a network node, such as an LTE eNodeB, or a UE. Certain variations of the method, as explained in further detail below, can be carried out in only one or the other.

As shown at block 710, the illustrated method begins with monitoring a time difference between uplink transmission timings for a pair of TAGs for the UE, each TAG comprising at least one serving cell. As shown at blocks 1720 and 1730, the method further includes determining whether the UE is able to support the time difference and, in response to determining that the UE is not able to support the time difference, excluding serving cells associated with one of the TAGS in the pair from uplink carrier aggregation.

In some embodiments of the illustrated method, at least one TAG of the pair of TAGs is associated with only a single serving cell. In some of these and in some other embodiments, one TAG of the pair of TAGs comprises a candidate serving cell for inclusion in uplink carrier aggregation, and excluding serving cells associated with one of the TAGs in the pair from uplink carrier aggregation comprises refraining from adding the candidate serving cell for inclusion in uplink carrier aggregation. In other embodiments, one TAG of the pair of TAGs comprises a candidate serving cell for inclusion in uplink carrier aggregation, and excluding serving cells associated with one of the TAGs in the pair from uplink carrier aggregation comprises adding the candidate serving cell to uplink carrier aggregation and excluding one or more serving cells that were previously active.

In some embodiments, determining whether the UE is able to support the time difference comprises comparing the time difference to a pre-defined timing difference capability for the UE. In other embodiments, determining whether the UE is able to support the time difference comprises comparing the time difference to a timing difference capability for the UE that has been calculated by the UE.

In some embodiments, excluding serving cells associated with one of the TAGs comprises determining that only one TAG of the pair of TAGs is a secondary TAG (sTAG) and, in response to so determining, excluding serving cells associated with the sTAG. In other embodiments, excluding serving cells associated with one of the TAGs comprises determining that both TAGs of the pair of TAGs are sTAGs, and, in response to so determining, selecting one of the sTAGs for exclusion. In various instances of these latter embodiments, selecting one of the sTAGs for exclusion may be based on one or more of: types of services provided by serving cells in the respective sTAGs; throughputs offered by serving cells in the respective sTAGs; radio link quality in one or more serving cells in the respective sTAGs; cell sizes for one or more serving cells in the respective sTAGs; transmission timing differences between each of the sTAG and a primary TAG, pTAG; loading of one or more serving cells in the respective sTAGs; multi-antenna capabilities of serving cells; and target quality of service and/or minimum guaranteed bitrate requirements. In some of these embodiments, the selecting may be further based on an indicator for one or more serving cells, the indicator indicating whether or not the serving cell may be excluded. In embodiments where the latter methods are carried out by the UE, the indicator may be received from a network node.

In some examples of any of the preceding embodiments, the method may further comprise determining that one or more of the serving cells to be excluded from uplink carrier aggregation are usable for downlink carrier aggregation, and reconfiguring those one or more of the serving cells for downlink-only carrier aggregation. In those of these latter embodiments that are carried out by the UE, the method may further comprise indicating, to a network node, that the reconfigured one or more of the serving cells are available only for downlink carrier aggregation.

In some embodiments carried out by the UE, the method further comprises indicating, to a network node, that the excluded serving cells are not available for uplink carrier aggregation.

In some embodiments, the method is carried out by a network node controlling one or more of the serving cells. In some of these embodiments, the method further comprises receiving, from the UE, capability information about the supported time difference between uplink transmission timings for a pair of TAGs for the UE. In others of these embodiments, the method further comprises deactivating all of the excluded serving cells that are not usable for downlink carrier aggregation.

As discussed above, the various techniques illustrated in Figures 11-13, and variants thereof, may be implemented using processing circuits, where the processing circuits are configured, e.g., with appropriate program code stored in memory circuits, to carry out the operations described above. While some of these embodiments are based on a programmed microprocessor or other programmed processing element, it will be appreciated, as noted above, that not all of the steps of these techniques are necessarily performed in a single microprocessor or even in a single module. It will be further appreciated that embodiments of the presently disclosed techniques further include computer program products for application in a user terminal as well as corresponding computer program products for application in a base station apparatus.

Various aspects of the above-described embodiments can also be understood as being carried out by functional "modules," which may be program instructions executing on an appropriate processor circuit, hard-coded digital circuitry and/or analog circuitry, or appropriate combinations thereof. Thus, for example, a processor 408 or 508 adapted to carry out one or more of the techniques disclosed herein is shown in Figure 18 and can be understood to include a time difference unit or circuit 1810 for monitoring a time difference between uplink transmission timings for a pair of TAGs for the UE, each TAG comprising at least one serving cell, and a CA handling unit/circuit 1820 determining whether the UE is able to support the time difference and, in response to determining that the UE is not able to support the time difference, excluding serving cells associated with one of the TAGS in the pair from uplink carrier aggregation. The example processor 408, 508 may also be understood to include a signalling unit/circuit 1830 for communicating with the network (in the case of a UE) or for communicating with the UE and/or other network nodes (in the case of a network node). It will be appreciated that the functional representation of processor 408, 508 shown in Figure 18 may be adapted to carry out any of the several variants of the techniques discussed above.

Detailed above were various techniques and apparatus for handling timing advance groups (TAGs) for a UE capable of carrier aggregation for uplink transmissions.

Abbreviations
- ACK: Acknowledge
- A/N: ACK/NACK
- DL-SCH: Downlink shared channel
- CA: Carrier aggregation
- CC: Component carrier
- CE: Control element
- CP: Cyclic prefix
- CQI: Channel quality indicator
- CRC: Cyclic redundancy check
- C-RNTI: Cell radio network temporary identifier
- CSI: Channel state information
- DCI: Downlink control information
- DFT: Discrete Fourier transform
- DL: Downlink
- EGF: Early give-up function
- eNB: eNodeB
- FFT: Fast Fourier transform (implementation of DFT)
- HARQ: Hybrid automatic repeat request
- HO: handover
- IFFT: Inverse fast Fourier transform
- MAC: Medium access control
- MIB: Master information block
- NACK: Not acknowledged
- NW: Network
- OFDM: Orthogonal frequency division multiplexing
- OPP: Operating performance point
- PBCH: Physical broadcast channel
- PCell: Primary cell
- PCFICH: Physical control format indicator channel
- PDSCH: Physical downlink shared channel
- PMI: Precoding matrix indication
- PRACH: Physical random access channel
- pTAG: Primary TAG
- PUCCH: Physical uplink control channel
- RACH: Random access channel
- RAN: Radio access network
- RA-RNTI: Random access radio network temporary identifier
- RB: Resource block
- RI: Rank indication
- RLC: Radio link control
- RLF: Radio link failure
- RRC: Radio resource control
- RSIG: Reference Signal
- SCell: Secondary cell
- SC-FDMA: Single carrier frequency division multiple access
- SG: Scheduling grant
- SR: Scheduling request
- sTAG: Secondary TAG
- TA: Timing advance
- TAG: Timing advance group
- TC-RNTI: Temporary C-RNTI
- UCI: Uplink control information
- UE: User equipment
- UL: Uplink

## Claims

1. A method for a wireless device for handling timing advance groups, TAGs, the wireless device capable of aggregating carriers for uplink transmissions, the method comprising
monitoring (1710) a time difference between uplink transmission timings for a pair of TAGs for the wireless device, each TAG comprising at least one serving cell;
determining (1720) whether the wireless device is able to support the time difference; and,
in response to determining that the wireless device is not able to support the time difference, excluding (1730) serving cells associated with one of the TAGs in the pair from uplink carrier aggregation, wherein excluding (1730) serving cells associated with one of the TAGs comprises determining at least one TAG of the pair of TAGs is a secondary TAG, sTAG, and in response to so determining, excluding a serving cell associated with one of the at least one sTAG;
the method further comprising:
determining that one or more of the serving cells to be excluded from uplink carrier aggregation are usable for downlink carrier aggregation; and
reconfiguring those one or more of the serving cells for downlink-only carrier aggregation.

2. The method of claim 1, wherein one TAG of the pair of TAGs comprises a candidate serving cell for inclusion in uplink carrier aggregation, and where excluding (1730) serving cells associated with one of the TAGs in the pair from uplink carrier aggregation comprises refraining from adding the candidate serving cell for inclusion in uplink carrier aggregation.

3. The method of claim 1, wherein one TAG of the pair of TAGs comprises a candidate serving cell for inclusion in uplink carrier aggregation, and where excluding (1730) serving cells associated with one of the TAGs in the pair from uplink carrier aggregation comprises adding the candidate serving cell to uplink carrier aggregation and excluding one or more serving cells that were previously active.

4. The method of any one of claims 1-3, wherein excluding (1730) serving cells associated with one of the TAGs comprises determining that both TAGs of the pair of TAGs are secondary TAGs, sTAGs, and, in response to so determining, selecting one of the sTAGs for exclusion, wherein said selecting one of the sTAGs for exclusion is based on one or more of:
types of services provided by serving cells in the respective sTAGs;
throughputs offered by serving cells in the respective sTAGs;
radio link quality in one or more serving cells in the respective sTAGs;
cell sizes for one or more serving cells in the respective sTAGs;
transmission timing differences between each of the sTAG and a primary TAG, pTAG;
loading of one or more serving cells in the respective sTAGs;
multi-antenna capabilities of serving cells; and
target quality of service and/or minimum guaranteed bitrate requirements.

5. The method of claim 4, wherein said selecting is further based on an indicator for one or more serving cells indicating whether or not the serving cell may be excluded.

6. The method of claim 5, wherein the method further comprises obtaining the indicator by receiving it from a network node.

7. The method of any one of claims 1-6, wherein the method further comprises indicating, to a network node, that the reconfigured one or more of the serving cells are available only for downlink carrier aggregation.

8. The method of any of claims 1-7, wherein the method further comprises indicating, to a network node, that the excluded serving cells are not available for uplink carrier aggregation.

9. An apparatus for a wireless device arranged to operate in a wireless telecommunication network supporting carrier aggregation, CA, the apparatus comprising:
a time difference circuit (1810) configured to monitor a time difference between uplink transmission timings for a pair of timing advance groups, TAGs, for the wireless device, each TAG comprising at least one serving cell; and
a CA handling circuit (1820) arranged to determine whether the wireless device is able to support the time difference and, in response to determining that the wireless device is not able to support the time difference, determine that at least one TAG of the pair of TAGs is a secondary TAG, sTAG, and in response to so determining, exclude serving cells associated with one of the at least one sTAG;
wherein the CA handling circuit (1820) is further configured to determine that one or more of the serving cells to be excluded from uplink carrier aggregation are usable for downlink carrier aggregation, and to reconfigure those one or more of the serving cells for downlink-only carrier aggregation.

10. The apparatus of claim 9, wherein one TAG of the pair of TAGs comprises a candidate serving cell for inclusion in uplink carrier aggregation, and wherein the CA handling circuit (1820) is configured to exclude serving cells associated with one of the TAGs in the pair from uplink carrier aggregation by refraining from adding the candidate serving cell for inclusion in uplink carrier aggregation.

11. The apparatus of claim 9, wherein one TAG of the pair of TAGs comprises a candidate serving cell for inclusion in uplink carrier aggregation, and wherein the CA handling circuit (1820) is configured to exclude serving cells associated with one of the TAGs in the pair from uplink carrier aggregation by adding the candidate serving cell to uplink carrier aggregation and excluding serving cells that were previously active.

12. The apparatus of any one of claims 9-11, wherein the CA handling circuit (1820) is configured to determine that both TAGs of the pair of TAGs are secondary TAGs, sTAGs, and to select one of the sTAGs for exclusion, in response to so determining, wherein the CA handling circuit (1820) is configured to select one of the sTAGs for exclusion based on one or more of:
types of services provided by serving cells in the respective sTAGs;
throughputs offered by serving cells in the respective sTAGs;
radio link quality in one or more serving cells in the respective sTAGs;
cell sizes for one or more serving cells in the respective sTAGs;
transmission timing differences between each of the sTAG and a primary TAG, pTAG;
loading of one or more serving cells in the respective sTAGs;
multi-antenna capabilities of serving cells; and
target quality of service and/or minimum guaranteed bitrate requirements.

13. The apparatus of claim 12, wherein the CA handling circuit (1820) is configured to select one of the sTAGs for exclusion based further on an indicator for one or more serving cells indicating whether or not the serving cell may be excluded.

14. The apparatus of claim 13, wherein the wireless device comprises the apparatus and wherein the CA handling circuit (1820) is configured to obtain the indicator by receiving it from a network node.

15. The apparatus of any one of claims 9-14, wherein the wireless device comprises the apparatus and wherein the apparatus further comprises a signalling circuit (1830) configured to indicate, to a network node, that the reconfigured one or more of the serving cells are available only for downlink carrier aggregation.

16. The apparatus of any one of claims 9-15, wherein the wireless device comprises the apparatus and wherein the apparatus further comprises a signalling circuit (1830) configured to indicate, to a network node, that the excluded serving cells are not available for uplink carrier aggregation.

## Patentansprüche

1. Verfahren für eine drahtlose Vorrichtung zum Handhaben von Zeitvorlaufsgruppen, TAGs, wobei die drahtlose Vorrichtung in der Lage ist, Träger für Uplink-Übertragungen zu aggregieren, das Verfahren umfassend ein Überwachen (1710) einer Zeitdifferenz zwischen Uplink-Übertragungszeiten für ein Paar von TAGs für die drahtlose Vorrichtung, jede TAG umfassend mindestens eine bedienende Zelle; Bestimmen (1720), ob die drahtlose Vorrichtung in der Lage ist, die Zeitdifferenz zu unterstützen; und
als Reaktion auf ein Bestimmen, dass die drahtlose Vorrichtung nicht in der Lage ist, die Zeitdifferenz zu unterstützen, Ausschließen (1730) von bedienenden Zellen, die mit einer der TAGs in dem Paar verbunden sind, von der Uplink-Trägeraggregation, wobei ein Ausschließen (1730) von bedienenden Zellen, die mit einer der TAGs assoziiert sind, ein Bestimmen umfasst, dass mindestens eine TAG des Paars von TAGs eine sekundäre TAG, sTAG, ist, und als Reaktion auf ein solches Bestimmen, Ausschließen einer bedienenden Zelle, die mit einer der mindestens einen sTAG assoziiert ist;
das Verfahren ferner Folgendes umfassend:
Bestimmen, dass eine oder mehrere der bedienenden Zellen, die von der Uplink-Trägeraggregation ausgeschlossen werden sollen, für eine Downlink-Trägeraggregation verwendbar sind; und
Umkonfigurieren jener einen oder mehreren bedienenden Zellen für eine nur Downlink-Trägeraggregation.

2. Verfahren nach Anspruch 1, wobei eine TAG des Paars von TAGs eine bedienende Kandidaten-Zelle für eine Einbeziehung in eine Uplink-Trägeraggregation umfasst, und wobei ein Ausschließen (1730) von bedienenden Zellen, die mit einer der TAGs in dem Paar assoziiert sind, von der Uplink-Trägeraggregation ein Unterlassen eines Hinzufügens der bedienenden Kandidaten-Zellen für eine Einbeziehung in die Uplink-Trägeraggregation umfasst.

3. Verfahren nach Anspruch 1, wobei eine TAG des Paars von TAGs eine bedienende Kandidaten-Zelle zur Aufnahme in die Uplink-Trägeraggregation umfasst, und wobei ein Ausschließen (1730) von bedienenden Zellen, die mit einer der TAGs in dem Paar von Uplink-Trägeraggregation assoziiert sind, ein Hinzufügen der bedienenden Kandidaten-Zelle zu der Uplink-Trägeraggregation ein das Ausschließen einer oder mehrerer bedienenden Zellen, die zuvor aktiv waren, umfasst.

4. Verfahren nach einem der Ansprüche 1 bis 3, wobei ein Ausschließen (1730) von bedienenden Zellen, die mit einer der TAGs assoziiert sind, ein Bestimmen umfasst, dass beide TAGs des Paars von TAGs sekundäre TAGs, sTAGs, sind, und als Reaktion auf ein solches Bestimmen ein Auswählen einer der sTAGs zum Ausschließen, wobei das Auswählen einer der sTAGs zum Ausschließen auf einem oder mehreren von Folgenden basiert:
Arten von Diensten, die von bedienenden Zellen in den jeweiligen sTAGs bereitgestellt werden;
Durchsätze, die von bedienenden Zellen in den jeweiligen sTAGs angeboten werden;
Funkverbindungsqualität in einer oder mehreren bedienenden Zellen in den jeweiligen sTAGs;
Zellgrößen für eine oder mehrere bedienende Zellen in den jeweiligen sTAGs;
Übertragungszeitunterschiede zwischen jeder der sTAG und einer primären TAG, pTAG;
Belastung einer oder mehrerer bedienender Zellen in den jeweiligen sTAGs;
Mehrantennenfähigkeit der bedienenden Zellen; und
Zielqualität des Dienstes und/oder Anforderungen an garantierte Mindestbitraten.

5. Verfahren nach Anspruch 4, wobei das Auswählen ferner auf einem Indikator für eine oder mehrere bedienende Zellen basiert, der angibt, ob die bedienende Zelle ausgeschlossen werden kann.

6. Verfahren nach Anspruch 5, wobei das Verfahren ferner ein Erlangen des Indikators durch sein Empfangen von einem Netzwerkknoten umfasst.

7. Verfahren nach einem der Ansprüche 1 bis 6, wobei das Verfahren ferner ein Angeben, zu einem Netzknoten umfasst, dass die rekonfigurierte eine oder mehrere der bedienenden Zellen nur für Downlink-Trägeraggregation verfügbar sind.

8. Verfahren nach einem der Ansprüche 1 bis 7, wobei das Verfahren ferner ein Angeben, zu einem Netzwerkknoten umfasst, dass die ausgeschlossenen bedienenden Zellen nicht für eine Uplink-Trägeraggregation verfügbar sind.

9. Gerät für eine drahtlose Vorrichtung, das angeordnet ist, um in einem drahtlosen Telekommunikationsnetzwerk betrieben zu werden, das Trägeraggregation, CA, unterstützt, das Gerät umfassend:
eine Zeitdifferenzschaltung (1810), die konfiguriert ist, um eine Zeitdifferenz zwischen Uplink-Übertragungszeiten für ein Paar von Zeitvorlaufsgruppen, TAGs, für die drahtlose Vorrichtung zu überwachen, jede TAG umfassend mindestens eine bedienende Zelle; und
eine CA-Handhabungsschaltung (1820), die angeordnet ist, um zu bestimmen, ob die drahtlose Vorrichtung in der Lage ist, die Zeitdifferenz zu unterstützen, und als Reaktion auf ein Bestimmen, dass die drahtlose Vorrichtung nicht in der Lage ist, die Zeitdifferenz zu unterstützen, Bestimmen, dass mindestens ein TAG des Paars von TAGs eine sekundäre TAG, sTAG, ist, und als Reaktion auf ein solches Bestimmen, Ausschließen von bedienenden Zellen, die mit einer der mindestens einen sTAG assoziiert sind;
wobei:
die CA-Handhabungsschaltung (1820) ferner konfiguriert ist, um zu bestimmen, dass eine oder mehrere der bedienenden Zellen, die von einer Uplink-Trägeraggregation ausgeschlossen werden sollen, für eine Downlink-Trägeraggregation verwendbar sind, und um jene eine oder mehrere der bedienenden Zellen für eine nur Downlink-Trägeraggregation neu zu konfigurieren.

10. Vorrichtung nach Anspruch 9, wobei eine TAG des Paars von TAGs eine bedienende Kandidaten-Zelle für eine Einbeziehung in eine Uplink-Trägeraggregation umfasst, und wobei die CA-Handhabungsschaltung (1820) konfiguriert ist, um bedienende Zellen, die mit einer der TAGs in dem Paar assoziiert sind, von einer Uplink-Trägeraggregation auszuschließen, indem sie ein Hinzufügen der bedienenden Kandidaten-Zelle für eine Einbeziehung in eine Uplink-Trägeraggregation unterlässt.

11. Gerät nach Anspruch 9, wobei eine TAG des Paars von TAGs eine bedienende Kandidaten-Zelle für eine Einbeziehung in die Uplink-Trägeraggregation umfasst, und wobei die CA-Handhabungsschaltung (1820) konfiguriert ist, um bedienende Zellen, die mit einer der TAGs in dem Paar assoziiert sind, von der Uplink-Trägeraggregation auszuschließen, indem sie die bedienende Kandidaten-Zelle zu einer Uplink-Trägeraggregation hinzufügt und bedienende Zellen ausschließt, die zuvor aktiv waren.

12. Gerät nach einem der Ansprüche 9-11, wobei die CA-Handhabungsschaltung (1820) konfiguriert ist, um zu bestimmen, dass beide TAGs des TAG-Paars sekundäre TAGs, sTAGs, sind, und um als Reaktion auf ein solches Bestimmen eine der sTAGs zum Ausschließen auszuwählen, wobei die CA-Handhabungsschaltung (1820) konfiguriert ist, um eine der sTAGs zum Ausschließen auszuwählen, basierend auf einem oder mehreren von Folgenden:
Arten von Diensten, die von bedienenden Zellen in den jeweiligen sTAGs bereitgestellt werden;
Durchsätze, die von bedienenden Zellen in den jeweiligen sTAGs angeboten werden;
Funkverbindungsqualität in einer oder mehreren bedienenden Zellen in den jeweiligen sTAGs;
Zellgrößen für eine oder mehrere bedienende Zellen in den jeweiligen sTAGs;
Übertragungszeitunterschiede zwischen jeder der sTAG und einer primären TAG, pTAG;
Laden einer oder mehrerer bedienenden Zellen in die jeweiligen sTAGs;
Mehrantennenfähigkeit der bedienenden Zellen; und
Zielqualität des Dienstes und/oder Anforderungen an garantierte Mindestbitraten.

13. Gerät nach Anspruch 12, wobei die CA-Handhabungsschaltung (1820) konfiguriert ist, um eine der sTAGs zum Ausschluss auszuwählen, ferner basierend auf einem Indikator für eine oder mehrere bedienende Zellen, der angibt, ob die bedienende Zelle ausgeschlossen werden kann.

14. Gerät nach Anspruch 13, wobei die drahtlose Vorrichtung das Gerät umfasst und wobei die CA-Handhabungsschaltung (1820) konfiguriert ist, um den Indikator zu erlangen, indem sie ihn von einem Netzwerkknoten empfängt.

15. Gerät nach einem der Ansprüche 9-14, wobei die drahtlose Vorrichtung das Gerät umfasst und wobei das Gerät ferner eine Signalisierungsschaltung (1830) umfasst, die konfiguriert ist, um einem Netzwerkknoten anzugeben, dass die rekonfigurierte eine oder rekonfigurierten mehreren der bedienenden Zellen nur für eine Downlink-Trägeraggregation verfügbar sind.

16. Gerät nach einem der Ansprüche 9-15, wobei die drahtlose Vorrichtung das Gerät umfasst und wobei das Gerät ferner eine Signalisierungsschaltung (1830) umfasst, die konfiguriert ist, um einem Netzwerkknoten anzugeben, dass die ausgeschlossenen bedienenden Zellen für eine Uplink-Trägeraggregation nicht verfügbar sind.

## Revendications

1. Procédé pour un dispositif sans fil pour la gestion de groupes d'avance temporelle, TAG, le dispositif sans fil étant capable d'agréger des porteuses pour des transmissions en liaison montante, le procédé comprenant
la surveillance (1710) d'une différence de temps entre des synchronisations de transmission en liaison montante pour une paire de TAG pour le dispositif sans fil, chaque TAG comprenant au moins une cellule de desserte ;
la détermination (1720) si le dispositif sans fil est capable de prendre en charge la différence de temps ;
et,
en réponse à la détermination que le dispositif sans fil n'est pas capable de prendre en charge la différence de temps, l'exclusion (1730) des cellules de desserte associées à l'un des TAG dans la paire de l'agrégation de porteuses de liaison montante, dans lequel l'exclusion (1730) des cellules de desserte associées à l'une des TAG comprend la détermination d'au moins un TAG de la paire de TAG comme étant un TAG secondaire, sTAG, et en réponse à cette détermination, l'exclusion d'une cellule de desserte associée à l'un de l'au moins un sTAG ;
le procédé comprenant en outre :
la détermination qu'une ou plusieurs des cellules de desserte à exclure de l'agrégation de porteuses de liaison montante sont utilisables pour l'agrégation de porteuses de liaison descendante ; et
la reconfiguration de ces une ou plusieurs des cellules de desserte pour une agrégation de porteuses en liaison descendante uniquement.

2. Procédé selon la revendication 1, dans lequel un TAG de la paire de TAG comprend une cellule de desserte candidate à inclure dans l'agrégation de porteuses de liaison montante, et où l'exclusion (1730) des cellules de desserte associées à l'un des TAG de la paire de l'agrégation de porteuses de liaison montante comprend l'abstention de l'ajout de la cellule de desserte candidate pour l'inclusion dans l'agrégation de porteuses de liaison montante.

3. Procédé selon la revendication 1, dans lequel un TAG de la paire de TAG comprend une cellule de desserte candidate à inclure dans l'agrégation de porteuses de liaison montante, et où l'exclusion (1730) des cellules de desserte associées à l'un des TAG de la paire de l'agrégation de porteuses de liaison montante comprend l'ajout de la cellule de desserte candidate à l'agrégation de porteuses de liaison montante et l'exclusion d'une ou plusieurs cellules de desserte qui étaient auparavant actives.

4. Procédé selon l'une quelconque des revendications 1 à 3, dans lequel l'exclusion (1730) des cellules de desserte associées à l'un des TAG comprend la détermination que les deux TAG de la paire de TAG sont des TAG secondaires, sTAG, en réponse à cette détermination, la sélection d'un des sTAG pour l'exclusion, dans lequel ladite sélection d'un des sTAG pour l'exclusion est basée sur un ou plusieurs parmi :
les types de services fournis par les cellules de desserte dans les sTAG respectifs ;
les débits offerts par les cellules de desserte dans les sTAG respectifs ;
la qualité de la liaison radio dans une ou plusieurs cellules de desserte dans les sTAG respectifs ;
les tailles de cellules pour une ou plusieurs cellules de desserte dans les sTAG respectifs ;
les différences de synchronisation de transmission entre chacun des sTAG et un TAG primaire, pTAG ;
le chargement d'une ou plusieurs cellules de desserte dans les sTAG respectifs ;
les capacités multi-antennes des cellules de desserte ; et
la qualité de service cible et / ou les exigences de débit binaire minimum garanti.

5. Procédé selon la revendication 4, dans lequel ladite sélection est en outre basée sur un indicateur pour une ou plusieurs cellules de desserte indiquant si la cellule de desserte peut être exclue ou non.

6. Procédé selon la revendication 5, dans lequel le procédé comprend en outre l'obtention de l'indicateur en le recevant à partir d'un nœud de réseau.

7. Procédé selon l'une quelconque des revendications 1 à 6, dans lequel le procédé comprend en outre l'indication, à un nœud de réseau, que l'une ou plusieurs cellules de desserte reconfigurées sont disponibles pour l'agrégation de porteuses de liaison descendante uniquement.

8. Procédé selon l'une quelconque des revendications 1 à 7, dans lequel le procédé comprend en outre l'indication, à un nœud de réseau, que les cellules de desserte exclues ne sont pas disponibles pour l'agrégation de porteuses de liaison montante.

9. Appareil pour un dispositif sans fil agencé pour fonctionner dans un réseau de télécommunication sans fil prenant en charge l'agrégation de porteuses, CA, l'appareil comprenant
un circuit de différence de temps (1810) configuré pour surveiller une différence de temps entre les synchronisations de transmission de liaison montante pour une paire de groupes d'avance temporelle, TAG, pour le dispositif sans fil, chaque TAG comprenant au moins une cellule de desserte ; et
un circuit de gestion CA (1820) agencé pour déterminer si le dispositif sans fil est capable de prendre en charge la différence de temps et, en réponse à la détermination que le dispositif sans fil n'est pas capable de prendre en charge la différence de temps, déterminer qu'au moins un TAG de la paire des TAGs est une réponse secondaire TAG, sTAG, et en réponse à ladite détermination, exclure les cellules de desserte associées à l'un de l'au moins un sTAG ;
dans lequel
le circuit de traitement CA (1820) est en outre configuré pour déterminer qu'une ou plusieurs des cellules de desserte à exclure de l'agrégation de porteuses de liaison montante sont utilisables pour l'agrégation de porteuses de liaison descendante, et pour reconfigurer ces une ou plusieurs des cellules de desserte pour l'agrégation de porteuse de liaison descendante uniquement.

10. Appareil selon la revendication 9, dans lequel un TAG de la paire de TAG comprend une cellule de desserte candidate à inclure dans l'agrégation de porteuse de liaison montante, et dans lequel le circuit de gestion de CA (1820) est configuré pour exclure les cellules de desserte associées à l'un des TAG dans la paire de l'agrégation de porteuses de liaison montante en s'abstenant d'ajouter la cellule de desserte candidate pour l'inclusion dans l'agrégation de porteuses de liaison montante.

11. Appareil selon la revendication 9, dans lequel un TAG de la paire de TAG comprend une cellule de desserte candidate pour l'inclusion dans l'agrégation de porteuse de liaison montante, et dans lequel le circuit de traitement CA (1820) est configuré pour exclure les cellules de desserte associées à l'un des TAG dans la paire de l'agrégation de porteuses de liaison montante en ajoutant la cellule de desserte candidate à l'agrégation de porteuses de liaison montante et en excluant les cellules de desserte qui étaient auparavant actives.

12. Appareil selon l'une quelconque des revendications 9 à 11, dans lequel le circuit de traitement CA (1820) est configuré pour déterminer que les deux TAG de la paire de TAG sont des TAG secondaires, sTAG, et pour sélectionner l'un des sTAG pour l'exclusion, en réponse à ladite détermination, dans lequel le circuit de traitement CA (1820) est configuré pour sélectionner l'un des sTAG à exclure sur la base d'un ou plusieurs parmi :
les types de services fournis par des cellules de desserte dans les sTAG respectifs ;
les débits offerts par les cellules de desserte dans les sTAG respectifs ;
la qualité de la liaison radio dans une ou plusieurs cellules de desserte dans les sTAG respectifs ;
les tailles de cellules pour une ou plusieurs cellules de desserte dans les sTAG respectifs ;
les différences de synchronisation de transmission entre chacun des sTAG et un TAG primaire, pTAG ;
le chargement d'une ou plusieurs cellules de desserte dans les sTAG respectifs ;
les capacités multi-antennes des cellules de desserte ; et
la qualité de service cible et / ou les exigences de débit binaire minimum garanti.

13. Appareil selon la revendication 12, dans lequel le circuit de gestion CA (1820) est configuré pour sélectionner l'un des sTAG pour l'exclusion sur la base en outre d'un indicateur pour une ou plusieurs cellules de desserte indiquant si la cellule de desserte peut être exclue ou non.

14. Appareil selon la revendication 13, dans lequel le dispositif sans fil comprend l'appareil et dans lequel le circuit de gestion CA (1820) est configuré pour obtenir l'indicateur en le recevant à partir d'un nœud de réseau.

15. Appareil selon l'une quelconque des revendications 9 à 14, dans lequel le dispositif sans fil comprend l'appareil et dans lequel l'appareil comprend en outre un circuit de signalisation (1830) configuré pour indiquer, à un nœud de réseau, que l'un ou plusieurs des cellules de desserte reconfigurées sont disponibles pour l'agrégation de porteuses de liaison descendante uniquement.

16. Appareil selon l'une quelconque des revendications 9 à 15, dans lequel le dispositif sans fil comprend l'appareil et dans lequel l'appareil comprend en outre un circuit de signalisation (1830) configuré pour indiquer, à un nœud de réseau, que les cellules de desserte exclues ne sont pas disponibles pour l'agrégation de porteuses de liaison montante.
